# EUROPÄISCHE PATENTSCHRIFT

(11) **EP 3 161 286 B1**
(45) Veröffentlichungstag und Bekanntmachung des Hinweises auf die Patenterteilung: **20.02.2019**
(21) Anmeldenummer: 15730420.5
(22) Anmeldetag: 03.06.2015
(51) Int. Cl.: F01N 3/20, F01N 3/36, F01N 3/28, F01N 3/26, F02M 43/04

(54) **VORRICHTUNG ZUR ERZEUGUNG VON AMMONIAK**
APPARATUS FOR PRODUCING AMMONIA
DISPOSITIF POUR LA PRODUCTION D'AMMONIAC

(30) Priorität: 25.06.2014 DE 102014108875
(43) Veröffentlichungstag der Anmeldung: 03.05.2017
(73) Patentinhaber: Baumot AG, 8152 Glattpark (CH)
(72) Erfinder: MIDDELMANN, Henning, 58313 Herdecke (DE)
(74) Vertreter: Rössler, Matthias
(86) Internationale Anmeldenummer: PCT/EP2015/062400
(87) Internationale Veröffentlichungsnummer: WO 2015/197331

(56) Entgegenhaltungen:
- EP-A1- 2 290 204
- EP-A1- 2 325 452
- EP-A2- 2 295 755
- DE-A1-102011 005 654

## Beschreibung

Die Erfindung betrifft eine Vorrichtung zur Erzeugung von Ammoniak aus einer Ammoniak-Vorläuferlösung. Eine derartige Vorrichtung kann beispielsweise dazu verwendet werden, um Ammoniak zu erzeugen, der für die Abgasreinigung in einer Abgasbehandlungsvorrichtung genutzt wird. Abgasbehandlungsvorrichtungen in denen zur Abgasreinigung Ammoniak genutzt wird, werden beispielsweise häufig zur Reinigung der Abgase von Diesel-Verbrennungskraftmaschinen in Kraftfahrzeugen verwendet. Mit Hilfe des Ammoniaks werden Stickstoffoxidverbindungen im Abgas der Verbrennungskraftmaschine reduziert. Als Ammoniak-Vorläuferlösung wird typischerweise Harnstoff-Wasser-Lösung verwendet. Eine solche Ammoniak-Vorläuferlösung hat im Gegensatz zu Ammoniak den Vorteil, dass sie unproblematisch in einem Tank gelagert werden kann. Besonders häufig wird eine Harnstoff-Wasser-Lösung mit einem Harnstoffgehalt von 32,5 % verwendet, die unter dem Handelsnamen AdBlue® erhältlich ist.

Die Umsetzung von Ammoniak-Vorläuferlösung in Ammoniak erfordert regelmäßig besondere technische Maßnahmen. Ammoniak entsteht aus der Ammoniak-Vorläuferlösung beispielsweise bei bestimmten Temperaturen. Besonders gut findet die Umsetzung in einem Temperaturbereich zwischen 200 °C und 550 °C statt.

Der Temperaturbereich zur Umsetzung von Ammoniak-Vorläuferlösung in Ammoniak kann durch die Anwesenheit von Katalysatoren erweitert und insbesondere abgesenkt werden, so dass die Umsetzung sogar in einem Temperaturbereich zwischen 140 °C und 250 °C stattfinden kann. Die thermische Umsetzung von Ammoniak-Vorläuferlösung in Ammoniak wird üblicherweise als Thermolyse oder als thermolytische Umsetzung bezeichnet. Wenn die Umsetzung zusätzlich durch einen Katalysator unterstützt wird, spricht man von der Hydrolyse oder hydrolytischer Umsetzung.

In jedem Fall muss die Ammoniak-Vorläuferlösung erwärmt werden, um zu Ammoniak umgesetzt zu werden. Dafür wird Wärmeenergie benötigt. Üblicherweise wird die Ammoniak-Vorläuferlösung daher in die Abgase einer Verbrennungskraftmaschine direkt zugegeben. Dann erfolgt die Erwärmung durch die Abgase. Hierbei besteht allerdings das Problem, dass insbesondere bei Diesel-Verbrennungskraftmaschinen die Abgase häufig relativ niedrige Temperaturen aufweisen und daher (zumindest in vielen Lastzuständen des Dieselmotors, insbesondere auch im Leerlauf) nicht ausreichend thermische Energie bereitstellen können, um Ammoniak-Vorläuferlösung effektiv in Ammoniak umzusetzen. Soweit möglich wurde dann so vorgegangen, dass eine Dosierung von Ammoniak in diesen Zeiträumen vermieden wurde. Falls dies nicht möglich war, wurde diesem Problem in der Vergangenheit regelmäßig mit Hilfe von geeigneten Maßnahmen zur Temperaturerhöhung in einer Abgasbehandlungsvorrichtung begegnet. Besonders häufig erfolgt das Beheizen der Abgase mit Hilfe einer elektrischen Heizung. Eine weitere bekannte Methode zur Temperaturerhöhung der Abgase ist das bewusste Verschieben des Betriebspunktes der Verbrennungskraftmaschine, so dass die Verbrennungskraftmaschine Abgase mit höheren Temperaturen erzeugt. Hierbei ist es allerdings problematisch, dass sich insbesondere dann, wenn Ammoniak-Vorläuferlösung nicht vollständig zu Ammoniak umgesetzt wird, Ablagerungen der Ammoniak-Vorläuferlösung in der Abgasbehandlungsvorrichtung bilden können. Solche Ablagerungen können die Abgasreinigung (dauerhaft) negativ beeinträchtigen, den Wirkungsgrad und Verbrauch verschlechtern und/oder die Abgasbehandlungsvorrichtung sogar beschädigen. Darüber hinaus kann es passieren, dass die Abgastemperatur zu niedrig ist, um durch die beschriebenen bekannten Maßnahmen zur Temperaturerhöhung die Abgastemperatur für die Umsetzung von Ammoniak-Vorläuferlösung in Ammoniak ausreichend zu erhöhen. Dies gilt insbesondere für Kaltstartphasen einer Verbrennungskraftmaschine, weil die Abgase der Verbrennungskraftmaschine in Kaltstartphasen von der thermischen Masse der Verbrennungskraftmaschine und der Abgasbehandlungsvorrichtung stark abgekühlt wird.

Ein Abgasbehandlungssystem, mit dem Abgas unter Verwendung von Harnstoff-Wasser-Lösung und Kraftstoff behandelt erden kann, ist aus der EP 2 295 755 A2 bekannt.

Es ist Aufgabe der vorliegenden Erfindung, eine gegenüber dem Stand der Technik verbesserte Vorrichtung zur Erzeugung von Ammoniak aus einer Ammoniak-Vorläuferlösung anzugeben, die insbesondere in der Lage ist, Ammoniak weitgehend unabhängig von den in einer Abgasbehandlungsvorrichtung vorherrschenden Temperaturen bereitzustellen.

Diese Aufgaben werden gelöst mit einer Vorrichtung gemäß den Merkmalen des Patentanspruchs 1. Weitere vorteilhafte Ausgestaltungen der Erfindung sind in den abhängigen Patentansprüchen angegeben. Die in den Patentansprüchen einzeln angeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Vorrichtung zur Erzeugung von Ammoniak aus einer Ammoniak-Vorläuferlösung, aufweisend einem Reaktionsraum mit einem Einströmanschluss, durch welchen ein Abgasstrom in den Reaktionsraum einströmen kann, mit einem Ausströmanschluss, durch welchen ein ammoniakhaltiger Gasstrom den Reaktionsraum verlassen kann, und mit einer Zugabevorrichtung, mit welcher dem Reaktionsraum wahlweise eine Ammoniak-Vorläuferlösung oder ein Brennstoff zugegeben werden kann.

Die Vorrichtung ist insbesondere als ein Bauteil konzipiert, welches extern bzw. benachbart einer Abgasleitung mit dem Hauptabgasstrom einer Verbrennungskraftmaschine positioniert ist. Die Vorrichtung ist typischerweise an einen Lei tungsabzweig angeschlossen, der von einer Abgasleitung einer Abgasbehandlungsvorrichtung einer Verbrennungskraftmaschine abzweigt. Dieser Leitungsabzweig mündet dann in den Einströmanschluss der Vorrichtung ein. Vorzugsweise zweigt der Leitungsabzweig in Abgasströmungsrichtung vor einem in der Abgasleitung integrierten Abgasturbolader von der Abgasbehandlungsvorrichtung ab. An dem Ausströmanschluss der Vorrichtung ist typischerweise eine Zugabelei tung angeschlossen, über die der von der Vorrichtung erzeugte ammoniakhaltige Gasstrom der Abgasbehandlungsvorrichtung zugegeben wird. Die Zugabeleitung mündet vorzugsweise in Abgasströmungsrichtung hinter dem Turbolader in die Abgasbehandlungsvorrichtung der Verbrennungskraftmaschine ein. Besonders bevorzugt ist die Vorrichtung damit in einem Abgas-Bypass integriert, der den Turbolader überbrückt. Dies hat den Vorteil, dass zwischen dem Einströmanschluss und dem Ausströmanschluss ein Druckunterschied anliegt, welcher dafür sorgt, dass die in den Einströmanschluss eingeleiteten Abgase mit einem Druckgefälle durch die Vorrichtung hindurch gedrückt werden.

Mit dem Reaktionsraum ist (mindestens) ein Hohlraum innerhalb der Vorrichtung gemeint, in welchem die Umsetzungsreaktion von Ammoniak-Vorläuferlösung in Ammoniak erfolgt. Der Reaktionsraum kann eine Komponente oder verschiedene funktionale Komponenten beinhalten, welche die Umsetzungsreaktion fördern. Dies sind beispielsweise (a) spezielle Katalysatoren, (b) Strukturen, die die Abgasströmung und die Bewegung des Ammoniaks und der Ammoniak-Vorläuferlösung in dem Reaktionsraum beeinflussen und/oder (c) Sensoren, usw.

Die Zugabevorrichtung umfasst vorzugsweise mindestens eine Düse, mit welcher die Ammoniak-Vorläuferlösung bzw. ein Brennstoff dem Reaktionsraum zugegeben werden können. Vorzugsweise umfasst die Zugabevorrichtung darüber hinaus mindestens ein Ventil, mit welchem die Zugabe von Ammoniak-Vorläuferlösung bzw. von Brennstoff (aktiv) gesteuert werden kann. Das Ventil hat insbesondere die Aufgabe, die Menge an zugeführter Ammoniak-Vorläuferlösung und die Menge an zugeführtem Brennstoff zu steuern. Dies kann beispielsweise durch eine Anpassung der Öffnungszeit des mindestens einen Ventils geschehen. Dabei ist die Dauer der Öffnungszeit proportional zur zugeführten Menge Ammoniak-Vorläuferlösung bzw. proportional zur zugeführten Menge Brennstoff.

Die Zugabevorrichtung der hier beschriebenen Vorrichtung hat die Eigenschaft, dass mit ihr sowohl Ammoniak-Vorläuferlösung als auch Brennstoff zugegeben werden kann. Hiermit ist gemeint, dass mit der Zugabevorrichtung Ammoniak-Vorläuferlösung und Brennstoff parallel und/oder zeitlich versetzt zueinander dem Reaktionsraum zugeführt werden können.

Die Ammoniak-Vorläuferlösung wurde weiter oben bereits eingehend beschrieben. Mit einem "Brennstoff" ist insbesondere ein kohlenwasserstoffhaltiges Fluid (Flüssigkeit und/oder Gas) gemeint, welches zusammen mit Sauerstoff verbrannt werden kann und so zu einer starken Temperaturerhöhung beiträgt. Brennstoffe sind beispielsweise die üblichen in Kraftfahrzeugen verwendeten Kraftstoffe, wie z. B. Benzin oder Diesel. Besonders bevorzugt wird als Brennstoff für die Vorrichtung Diesel-Kraftstoff verwendet, weil Diesel-Kraftstoff in Kraftfahrzeugen mit Diesel-Verbrennungskraftmaschine (für die die hier beschriebene Vorrichtung besonders geeignet ist) ohnehin zur Verfügung steht.

Durch die Zugabevorrichtung der hier behandelten Vorrichtung, die sowohl die Zugabe von Ammoniak-Vorläuferlösung als auch die Zugabe von Brennstoff durchführt, ist es möglich, der Vorrichtung Brennstoff zuzuführen. Brennstoff kann in der Vorrichtung verbrannt werden, so dass die Temperatur in der Vorrichtung erhöht wird und in dem zur Umsetzung von Ammoniak-Vorläuferlösung in Ammoniak notwendigen Temperaturbereich liegt. Die Erhöhung der Temperatur mit Hilfe von Brennstoff ist besonders effizient, weil geeigneter Brennstoff (beispielsweise Diesel-Kraftstoff) in Kraftfahrzeugen regelmäßig ohnehin zur Verfügung steht. Die Temperaturerhöhung erfolgt insbesondere dadurch, dass der Brennstoff auf eine katalytisch aktive Oberfläche aufgegeben wird, wo sich der Brennstoff entzündet. Weiter kann die Temperaturerhöhung auch erreicht werden, indem der Brennstoff mit einer Flamme bzw. einem Funken gezündet wird. Die Temperaturerhöhung mit Hilfe von Brennstoff kann insbesondere erheblich schneller als die Temperaturerhöhung mit Hilfe einer elektrischen Heizung sein. Elektrische Energie steht nämlich in einem Kraftfahrzeug regelmäßig nur begrenzt zur Verfügung, weil elektrische Energie aufwendig mit Hilfe eines Generators erzeugt werden muss.

Darüber hinaus hat die beschriebene Vorrichtung den großen Vorteil, dass nur ein kleiner (abgezweigter) Teil der Abgase einer Verbrennungskraftmaschine durch die Vorrichtung strömt und in der Vorrichtung erwärmt werden muss, wenn die Abgastemperatur unterhalb der für die Reaktion von Ammoniak-Vorläuferlösung zur Ammoniak notwendigen Temperatur liegt. Die Aufheizung der Abgase in der Vorrichtung kann daher mit einem erheblich reduzierten Energieverbrauch erfolgen als bei Vorrichtungen, die (nur) eine Aufheizung des gesamten Abgasstroms einer Verbrennungskraftmaschine ermöglichen.

Die Vorrichtung ist besonders vorteilhaft, wenn die Zugabevorrichtung ein Dosierventil umfasst, das eine erste Zuleitung für Ammoniak-Vorläuferlösung und eine zweite Zuleitung für einen Brennstoff aufweist.

Eine Versorgungsleitung für Ammoniak-Vorläuferlösung kann dann an die erste Zuleitung und eine Versorgungsleitung für Brennstoff an die zweite Zuleitung angeschlossen werden. In der Zugabevorrichtung ist vorzugsweise mindestens ein Ventil vorgesehen, mit welchem die Menge an Brennstoff und die Menge an Ammoniak-Vorläuferlösung, die der Vorrichtung zugeführt wird, jeweils (vorzugsweise getrennt voneinander) genau eingestellt werden können. Besonders bevorzugt beinhaltet die Zugabevorrichtung ein Mehr-Wege-Ventil, mit dem wahlweise Ammoniak-Vorläuferlösung oder Brennstoff zugeführt werden kann. Die Zugabevorrichtung hat vorzugsweise eine gemeinsame Düse, mit welcher sowohl Brennstoff als auch Ammoniak-Vorläuferlösung zugegeben werden kann. Durch die Düse gelangt dann wahlweise Ammoniak-Vorläuferlösung oder Brennstoff in den Reaktionsraum der Vorrichtung. Durch die Zugabe von Brennstoff erfolgt eine Temperaturerhöhung in der Vorrichtung. Sobald die Vorrichtung ausreichend erwärmt ist, wird Ammoniak-Vorläuferlösung zugegeben. Die Ammoniak-Vorläuferlösung wird in der erwärmten Vorrichtung besonders effektiv in Ammoniak umgesetzt. Wenn die Temperatur der Vorrichtung wieder absinken sollte, kann die Zugabe von Ammoniak-Vorläuferlösung wieder beendet werden und es kann erneut Brennstoff zu der Vorrichtung bzw. zu dem Reaktionsraum der Vorrichtung zugegeben werden, so dass die Temperatur wieder auf die für die Erzeugung von Ammoniak notwendige Temperatur erhöht wird und eine erneute Zugabe von Ammoniak-Vorläuferlösung erfolgen kann.

Besonders vorteilhaft ist die Vorrichtung, wenn in dem Reaktionsraum eine Auftreffstruktur angeordnet ist, auf welche die Zugabevorrichtung ausgerichtet ist und auf welche die zugeführte Ammoniak-Vorläuferlösung auftrifft.

Eine solche Auftreffstruktur kann beispielsweise in Form eines für den Abgasstrom durchströmbaren Wabenkörpers ausgebildet sein, auf dessen Stirnfläche die Ammoniak-Vorläuferlösung bzw. der Brennstoff auftrifft. Eine solche Auftreffstruktur ist insbesondere derart innerhalb der Vorrichtung angeordnet, dass sie durch den Brennstoff bzw. durch die in die Vorrichtung eintretenden Abgase effektiv erwärmt wird. Vorzugsweise steht die Auftreffstruktur nicht in unmittelbarem Kontakt mit einer Außenwand der Vorrichtung. Die Außenwand der Vorrichtung ist ggf. kühl, weil sie in Kontakt mit der Umgebung steht. Die Auftreffstruktur ist vorzugsweise freitragend oder zumindest abschnittsweise freitragend in dem Reaktionsraum angeordnet. Die Auftreffstruktur ist vorzugsweise so angeordnet, dass sie den Querschnitt des Reaktionsraums zumindest teilweise überspannt.

Weiterhin ist die Vorrichtung vorteilhaft, wenn die Auftreffstruktur mit einer Beschichtung versehen ist, die sowohl eine Hydrolyse von Ammoniak-Vorläuferlösung in Ammoniak als auch eine exotherme Reaktion von Brennstoff mit Sauerstoff katalysiert.

Eine derartige Beschichtung umfasst beispielsweise eine der folgenden Komponenten von katalytisch aktivem Material: a) Titandioxid, Aluminiumdioxid und Gold; b) Titandioxid, Platin und Palladium.

Eine katalytisch wirksame Beschichtung, die eine exotherme Reaktion des Brennstoffs mit Sauerstoff fördert, ist insbesondere vorteilhaft, weil eine solche Beschichtung die Zündtemperatur des Brennstoffs verringert und so vor allem lokale Temperaturspitzen in der Vorrichtung verhindert werden können. Gegebenenfalls kann durch eine katalytisch wirksame Beschichtung auch verhindert werden, dass zur Umsetzung des Brennstoffs in der Vorrichtung eine offene Flamme notwendig ist. Auch so können die thermischen Belastungen innerhalb der Vorrichtung gering gehalten werden. Darüber hinaus ist es möglich, dass zur Initiierung der Verbrennung keine separate bzw. elektrische Zündung erforderlich ist, sondern dass die Umsetzung des Brennstoffs spontan bei Zugabe des Brennstoffs in den Reaktionsraum der Vorrichtung startet. Der für die Verbrennung des Brennstoffs notwendige Sauerstoff tritt üblicherweise mit dem Abgas durch den Einströmanschluss in den Reaktionsraum ein. Insbesondere bei mager betriebenen Diesel-Verbrennungskraftmaschinen tritt üblicherweise ein hoher Sauerstoffanteil im Abgas auf. Alternativ oder zusätzlich zum Sauerstoff können auch nicht voll oxidierte Abgasbestandteile wie Kohlenmonoxid oder Stickstoffmonoxid mit dem Brennstoff umgesetzt werden.

Weiterhin ist die Vorrichtung vorteilhaft, wenn die Zugabevorrichtung eine gemeinsame Düse umfasst, mit der Ammoniak-Vorläuferlösung und Brennstoff in den Reaktionsraum gesprüht werden kann, wobei die Düse mit Ammoniak-Vorläuferlösung und mit Brennstoff unterschiedliche Sprühbilder erzeugt.

Mit dem Begriff "gemeinsame" Düse ist hier gemeint, dass sowohl die Ammoniak-Vorläuferlösung als auch der Brennstoff durch dieselbe Düse in den Reaktionsraum gelangt. Mit einem Sprühbild ist hier insbesondere die Form eines Sprühkegels gemeint, der sich ergibt, wenn Ammoniak-Vorläuferlösung bzw. Brennstoff durch eine Austrittsöffnung der Düse austreten. Der verwendete Brennstoff und die Ammoniak-Vorläuferlösung können unterschiedliche strömungstechnische Eigenschaften aufweisen. Insbesondere im Hinblick auf die Viskosität, die Dichte, die Temperaturkapazität und/oder die Oberflächenspannung unterscheiden sich der verwendete Brennstoff und die Ammoniak-Vorläuferlösung regelmäßig stark. Es ist daher möglich, eine Düse zur Zugabe von Ammoniak-Vorläuferlösung und Brennstoff so auszulegen, dass das von der Düse erzeugte Sprühbild mit Brennstoff und das von der Düse erzeugte Sprühbild mit Ammoniak-Vorläuferlösung unterschiedlich zueinander sind (z. B. hinsichtlich der Sprührichtung, der Sprühkegel-Aufweitung, der Sprühtropfengröße, usw.).

Zusätzlich ist es auch möglich, dass Ammoniak-Vorläuferlösung und Brennstoff an der Düse mit unterschiedlichen Drücken bereitgestellt werden. Auch der an der Düse anliegende Druck beeinflusst das Sprühbild an der Düse. Beispielsweise kann die Ammoniak-Vorläuferlösung an der Düse mit einem Druck bis zu 8 bar bereitgestellt werden, während der Brennstoff an der Düse mit einem davon signifikant abweichenden Druck bereitgestellt wird, beispielsweise (in Abhängigkeit eines konkreten Pumpe-Düse-Systems und einer gewünschten Spray-Bildung) mit einem niedrigeren Druck (z. B. kleiner 5 bar) und/oder einem höheren Druck (z. B. mindestens 20 bar, mindestens 50 bar oder sogar mehr als 200 bar). Dann wird der Brennstoff regelmäßig sehr viel feiner zerstäubt als die Ammoniak-Vorläuferlösung. Üblicherweise bildet sich dann für den Brennstoff ein weiter geöffneter Sprühkegel als für die Ammoniak-Vorläuferlösung. Zusätzlich kann auch durch die Konstruktion der Düse die Ausbildung von unterschiedlichen Sprühkegeln begünstigt werden. Dies kann beispielsweise durch geeignete Umlenkungen der Ammoniak-Vorläuferlösung bzw. des Brennstoffs in der Düse erreicht werden. Solche Umlenkungen wirken sich auf die unterschiedlichen Flüssigkeiten (Brennstoff bzw. Ammoniak-Vorläuferlösung) unterschiedlich aus, so dass dies unterschiedliche Sprühbilder begünstigt.

Es ist möglich, für die Zugabe von Ammoniak-Vorläuferlösung und/oder Brennstoff ein Trägergas einzusetzen, insbesondere Druckluft. Auch damit kann der vorgegebene Druck bei der Zugabe der Ammoniak-Vorläuferlösung und/oder des Brennstoffs beeinflusst bzw. angepasst werden.

Weiterhin vorteilhaft ist die Vorrichtung, wenn innerhalb des Reaktionsraums unterschiedliche Auftreffbereiche für Ammoniak-Vorläuferlösung und für Brennstoff vorgesehen sind.
Derartige unterschiedliche Auftreffbereiche können beispielsweise durch eine entsprechende zielgerichtete Auslegung der unterschiedlichen Sprühbilder für Ammoniak-Vorläuferlösung und für Brennstoff erreicht werden. Besonders bevorzugt ist es, wenn für Ammoniak-Vorläuferlösung als Sprühbild ein zentraler kegelförmiger Sprühkegel erzeugt wird, der zentral auf eine Auftreffstruktur in der Vorrichtung trifft und für den Brennstoff ein aufgeweiteter Sprühkegel erzeugt wird, bei dem in einem zentralen Bereich kein Brennstoff versprüht wird, so dass sich ein ringförmiger Auftreffbereich für Brennstoff auf der Auftreffstruktur ergibt, wobei der ringförmige Auftreffbereich für Brennstoff um den zentralen Auftreffbereich für Ammoniak-Vorläuferlösung herum angeordnet ist.

Bei einer derartigen Gestaltung der unterschiedlichen Auftreffbereiche für Ammoniak-Vorläuferlösung und für Brennstoff ist es möglich, in den unterschiedlichen Auftreffbereichen jeweils zielgerichtet geeignete, unterschiedliche Beschichtungen auf der Auftreffstruktur vorzusehen, wobei in dem ersten Auftreffbereich, in dem Ammoniak-Vorläuferlösung auf die Auftreffstruktur auftrifft, eine erste katalytisch wirksame Beschichtung vorgesehen ist, die die katalytische Umsetzung von Ammoniak-Vorläuferlösung in Ammoniak fördert, während in dem zweiten Auftreffbereich eine zweite katalytisch wirksame Beschichtung vorgesehen ist, die die Umsetzungsreaktion von Brennstoff zur Wärmeerzeugung fördert.

Weiterhin ist in dem Reaktionsraum eine elektrische Heizung angeordnet. Durch eine elektrische Heizung kann die Vorrichtung besonders effektiv aufgeheizt werden. Insbesondere ist es möglich, die Vorrichtung auch bei besonders niedrigen Temperaturen aufzuheizen, bei denen die Erzeugung von Wärme mit Hilfe von Brennstoff noch gar nicht möglich wäre, weil beispielsweise eine Mindesttemperatur für die katalytische Umsetzung des Brennstoffs mit Sauerstoff noch nicht erreicht ist.

Besonders vorteilhaft ist es, wenn die elektrische Heizung zugleich die Auftreffstruktur innerhalb der Vorrichtung bildet. Die erhöhte Temperatur innerhalb der Vorrichtung wird insbesondere im Bereich der Auftreffstruktur benötigt, weil dort eine Abkühlung durch die auftreffende Ammoniak-Vorläuferlösung stattfindet. Darüber hinaus ist gerade auf der Auftreffstruktur eine erhöhte Temperatur erforderlich, um die Umsetzungsreaktion der Ammoniak-Vorläuferlösung zu bewirken. Die elektrische Heizung trägt dazu bei, dass eine Mindesttemperatur und/oder ein Wärmebereich für die Dosierung eingehalten werden kann. Weiter ermöglicht diese infolge des Kontakts mit der Ammoniak-Vorläuferlösung einen schnelleren Wärmetransport in den Tropfen. Gleichzeitig kann eine hohe Turbulenz erzeugt werden, so dass z. B. so genannte "Leidenfrost-Effekte" weitreichend oder sogar vollständig vermieden werden können. Weiter kann so auch eine ausreichend hohe Wärmekapazität bereitgestellt werden, damit die auftreffenden Tropfen selbst keine wesentliche Abkühlung der elektrischen Heizung / Auftreffstruktur bewirken und damit die Umsetzungsreaktion gleichmäßig bzw. schnell gut ablaufen kann.

Besonders vorteilhaft ist die Vorrichtung, wenn die elektrische Heizung ein elektrisch beheizbarer Wabenkörper ist.

Ein elektrisch beheizbarer Wabenkörper eignet sich insbesondere, um mit Hilfe einer elektrischen Heizung eine Auftreffstruktur zu bilden, die gleichzeitig für den Abgasstrom durchströmbar ist. Ein elektrischer Wabenkörper kann beispielsweise eine aus metallischen Folien gebildete Heizspirale sein, die einen Querschnitt der Vorrichtung bzw. einen Querschnitt des Reaktionsraums der Vorrichtung überspannt.

Darüber hinaus ist die Vorrichtung vorteilhaft, wenn der Einströmanschluss tangential an dem Reaktionsraum angeordnet ist.

Durch eine tangentiale Anordnung des Einströmanschlusses kann gewährleistet werden, dass das in den Einströmanschluss einströmende Abgas innerhalb der Vorrichtung eine Wirbelströmung erzeugt. Diese Wirbelströmung hat einerseits den Vorteil, dass eine besonders gute Durchmischung von Ammoniak-Vorläuferlösung, Brennstoff und Abgas erfolgt. Darüber hinaus zentriert die Wirbelströmung den Brennstoff bzw. die Ammoniak-Vorläuferlösung innerhalb der Vorrichtung und sorgt dafür, dass der Brennstoff bzw. die Ammoniak-Vorläuferlösung nicht oder nur in geringem Maße mit einer Außenwand der Vorrichtung in Berührung kommt. So kann die Bildung von Ablagerungen des Brennstoffs bzw. der Ammoniak-Vorläuferlösung an der Außenwand der Vorrichtung verhindert werden können.

Weiterhin ist die Vorrichtung vorteilhaft, wenn der Reaktionsraum durch ein zylindrisches Umlenkelement in einen zylindrischen Spalt und eine zentrale Kammer unterteilt ist, wobei der zylindrische Spalt und die zentrale Kammer über einen Umlenkbereich miteinander verbunden sind, wobei der Einströmanschluss an dem zylindrischen Spalt angeordnet ist, der Abgasstrom von dem zylindrischen Spalt durch den Umlenkbereich in die zentrale Kammer geleitet wird und die Zugabevorrichtung die Vorläuferlösung und den Brennstoff durch den Umlenkbereich in einer axialen Richtung in die zentrale Kammer zugibt.

Die gesamte Vorrichtung hat vorzugsweise ein zylindrisches Gehäuse. Dabei ist an einer Stirnfläche des zylindrischen Gehäuses die Zugabevorrichtung angeordnet, wobei die Zugaberichtung zu diesem zylindrischen Gehäuse in axialer Richtung ausgerichtet ist. An der gegenüberliegenden Stirnseite des zylindrischen Gehäuses ist vorzugsweise der Ausströmanschluss angeordnet. Der Einströmanschluss mündet mit einer tangentialen Richtung durch eine Umfangsfläche in das zylindrische Gehäuse ein. Der Reaktionsraum ist innerhalb des zylindrischen Gehäuses der Vorrichtung angeordnet. Ausgehend von der Zugabevorrichtung in Richtung hin zu dem Ausströmanschluss ist dann das Umlenkelement angeordnet, welches den zylindrischen (ringförmigen) Spalt von der zentralen Kammer des Reaktionsraums abtrennt. Der zylindrische Spalt ist vorzugsweise nur in Richtung hin zu der Zugabevorrichtung geöffnet und auf der gegenüberliegenden Seite verschlossen. Das durch den Einströmanschluss eintretende Abgas tritt daher in der Nähe der Zugabevorrichtung in einem Umlenkbereich von dem zylindrischen Spalt in die zentrale Kammer über. In dem Umlenkbereich existiert vorzugsweise auch noch eine perforierte Blende, wobei die Abgasströmung diese perforierte Blende von dem Weg aus dem zylindrischen Spalt in die zentrale Kammer passiert. Diese perforierte Blende hat vorzugsweise eine große zentrale Öffnung, durch welche die Zugabevorrichtung den Brennstoff bzw. die Ammoniak-Vorläuferlösung in die zentrale Kammer zugibt. Vorzugsweise erstreckt sich der weiter oben beschriebene Sprühkegel der Zugabevorrichtung durch diese zentrale Öffnung. Um die zentrale Öffnung herum sind vorzugsweise eine Vielzahl von kleinen Öffnungen angeordnet, die den Eintritt des Abgases in die zentrale Kammer begünstigen. In axialer Richtung und ausgehend von der Zugabevorrichtung hin zu dem Ausströmanschluss ist (hinter dem Umlenkelement) die bereits beschriebene Auftreffstruktur angeordnet, die den Querschnitt der Vorrichtung und des Reaktionsraums überspannt und die auch eine elektrische Heizung umfassen kann. In axialer Richtung anschließend zur Auftreffstruktur können sich zusätzliche Katalysatorträgerkörper befinden, die zur Umwandlung der Ammoniak-Vorläuferlösung in Ammoniak beitragen. Dort können auch Sensoren und weitere Komponenten angeordnet sein, mit denen die Erzeugung von Ammoniak in der Vorrichtung unterstützt und/oder überwacht werden kann. Ein Sensor der Vorrichtung kann insbesondere einen Temperatursensor und/oder eine Lambda-Sonde, mit welcher ein Sauerstoff-Anteil im Gas bestimmt werden kann, umfassen.

Das außen angeordnete zylindrische Umlenkelement hat den Vorteil, dass eine thermische Isolierung der zentralen Kammer von der Außenwand der Vorrichtung realisiert ist, so dass die in die zentrale Kammer zugegebene Ammoniak-Vorläuferlösung nicht mit der Außenwand der Vorrichtung in Kontakt treten kann. Darüber hinaus findet durch das zylindrische Umlenkelement eine Erwärmung der zentralen Kammer statt, weil das durch den Einströmanschluss einströmende Abgas zunächst (durch den zylindrischen Spalt) die zentrale Kammer umströmt und erwärmt, bevor es durch den Umlenkbereich in die zentrale Kammer eintritt.

Weiter wird eine Abgasbehandlungsvorrichtung zur Reinigung der Abgase einer Verbrennungskraftmaschine vorgeschlagen, aufweisend eine hier beschriebene Vorrichtung zur Erzeugung von Ammoniak, wobei die Einströmöffnung über einen Leitungsabzweig an eine Abgasleitung der Abgasbehandlungsvorrichtung angeschlossen ist und die Ausströmöffnung über eine Zugabeleitung an die Abgasleitung angeschlossen ist, wobei durch die Einströmöffnung zwischen 0,1 % und 5,0 % des Abgases aus der Verbrennungskraftmaschine in den Reaktionsraum strömt.

Wie bereits beschrieben, zweigt der Leitungsabzweig vorzugsweise vor einem Turbolader von der Abgasleitung ab, während die Zugabeleitung nach dem Turbolader in die Abgasleitung einmündet. Aus diesem Grund ist es vorteilhaft, wenn nur ein verhältnismäßig kleiner Abgasstrom aus der Hauptabgasleitung abgezweigt wird und durch den Einströmanschluss in die Vorrichtung strömt. Der Hauptabgasstrom kann dann in dem Turbolader verwendet werden, um mechanische Energie zur Aufladung der Verbrennungskraftmaschine zu erzeugen. Darüber hinaus kann ein derart kleiner Abgasteilstrom zwischen 0,1 % und 5 % des Abgases mit Hilfe des Brennstoffs bzw. mit Hilfe einer elektrischen Heizung besonders effektiv erwärmt werden, weil hierzu verhältnismäßig wenig thermische Energie notwendig ist. In der Abgasbehandlungsvorrichtung ist vorzugsweise ein SCR-Katalysator angeordnet, an dem Stickstoffoxidverbindungen im Abgas unter Zuhilfenahme des erzeugen Ammoniaks zu unschädlichen Substanzen reduziert werden können.

Eine solche Abgasbehandlungsvorrichtung wird besonders bevorzugt zur Reinigung der Abgase einer Diesel-Verbrennungskraftmaschine verwendet. Die Abgasbehandlungsvorrichtung und die Vorrichtung sind insbesondere auch zur Abgasreinigung in Wasserfahrzeugen, Schienenfahrzeugen, Land- und Baumaschinen usw. geeignet. Besonders geeignet sind die Vorrichtung und die Abgasbehandlungsvorrichtungen in Anwendungen, in denen die Abgase einer Verbrennungskraftmaschine gereinigt werden, die überwiegend im Teillastbereich und im Niedriglastbereich betrieben wird, weil dann besonders häufig niedrige Abgastemperaturen auftreten.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und vor allem die in den Figuren dargestellten Größenverhältnisse nur schematisch sind. Es zeigen:
- Fig. 1:: eine beschriebene Vorrichtung,
- Fig. 2:: einen Querschnitt durch eine erste Ausführungsvariante einer beschriebenen Vorrichtung,
- Fig. 3:: einen Querschnitt durch eine zweite Ausführungsvariante einer beschriebenen Vorrichtung, und
- Fig. 4:: ein Kraftfahrzeug aufweisend eine beschriebene Vorrichtung.

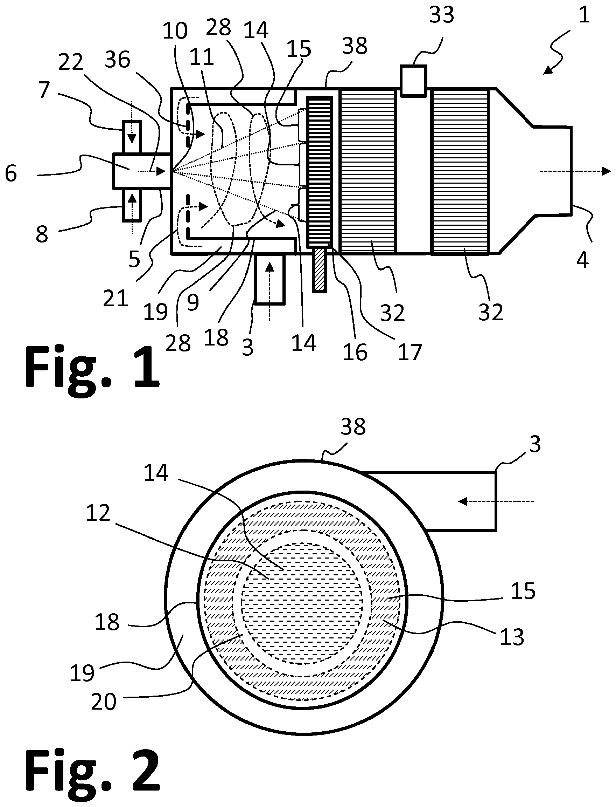

In Fig. 1 ist eine Vorrichtung 1 dargestellt, die ein zylindrisches Gehäuse 38 aufweist. An der einen Stirnseite der zylindrischen Gehäuses 38 der Vorrichtung befindet sich die Zugabevorrichtung 5, über die der Vorrichtung Brennstoff (z. B. Diesel-Kraftstoff) bzw. Ammoniak-Vorläuferlösung (z. B. Harnstoff-Wasser-Lösung) zugeführt werden kann. Die Zugabevorrichtung 5 weist dazu eine erste Zuleitung 7 zur Zugabe von Ammoniak-Vorläuferlösung und eine zweite Zuleitung 8 zur Zugabe von Brennstoff auf. Die Zugabevorrichtung 5 umfasst auch ein Dosierventil 6, mit welchem (wahlweise) der Brennstoff und die Ammoniak-Vorläuferlösung dosiert werden können. Die Zugabevorrichtung 5 gibt den Brennstoff bzw. die Ammoniak-Vorläuferlösung mit einer axialen Richtung 22 in einen Reaktionsraum 2 der Vorrichtung 1 zu. Dabei wird der Brennstoff bzw. die Ammoniak-Vorläuferlösung mit einem Sprühbild 11 gesprüht.

Gegenüberliegend zu der Zugabevorrichtung 5 ist an der Vorrichtung 1 der Ausströmanschluss 4 angeordnet, durch welchen ein ammoniakhaltiger Gasstrom aus der Vorrichtung 1 austreten kann. An der Umfangsfläche der Vorrichtung 1 ist der Einströmanschluss 3 angeordnet, über welchen ein Abgasstrom in die Vorrichtung eintreten kann. Der Reaktionsraum 2 der Vorrichtung 1 ist durch ein Umlenkelement 18 in einen zylindrischen Spalt 19 und eine zentrale Kammer 20 unterteilt. Der zylindrische Spalt 19 und die zentrale Kammer 20 sind im Bereich der Zugabevorrichtung 5 über einen Umlenkbereich 21 miteinander verbunden. In dem Umlenkbereich 21 ist auch eine perforierte Blende 36 vorgesehen, die eine zentrale Öffnung hat, durch welche die Zugabevorrichtung 5 Ammoniak-Vorläuferlösung bzw. Brennstoff in die zentrale Kammer 20 des Reaktionsraums 2 zugeben kann. Die perforierte Blende 36 hat darüber hinaus zusätzliche (um die zentrale Öffnung herum angeordnete) kleinere Öffnungen, durch welche der Abgasstrom in die zentrale Kammer 20 übertreten kann.

Der Einströmanschluss 3 ist vorzugsweise tangential an der Vorrichtung 1 angeordnet. Dadurch entsteht innerhalb des Reaktionsraums 2 bzw. innerhalb des zylindrischen Spalts 19 und der zentralen Kammer 20 eine Wirbelströmung 28.

In Abgasströmungsrichtung innerhalb der Vorrichtung 1 ist hinter dem Umlenkelement 18 und der zentralen Kammer 20 eine Auftreffstruktur 9 angeordnet, die einen ersten Auftreffbereich 14 und einen zweiten Auftreffbereich 15 bildet, wobei der erste Auftreffbereich 14 zur Aufnahme von Ammoniak-Vorläuferlösung und der zweite Auftreffbereich 15 zur Aufnahme von Brennstoff vorgesehen ist. Die Auftreffstruktur 9 ist in der vorliegenden Ausführungsvariante einer Vorrichtung 1 als elektrische Heizung 16 und besonders bevorzugt als elektrisch beheizbarer Wabenkörper 17 ausgebildet. In Strömungsrichtung hinter der Auftreffstruktur 9 ist mindestens ein Katalysatorträgerkörper 32 angeordnet, der Beschichtungen zur chemischen Umsetzung der Ammoniak-Vorläuferlösung und/oder des Brennstoffs beinhalten kann. Zusätzlich ist in der Vorrichtung 1 auch noch ein Sensor 33 vorgesehen, mit welchem die Umsetzung von Ammoniak-Vorläuferlösung zu Ammoniak in der Vorrichtung 1 überwacht werden kann. Der Sensor 33 kann beispielsweise einen Temperatursensor und/oder eine Lambda-Sonde umfassen, mit welcher der Sauerstoffgehalt im Gasstrom bestimmt werden kann.

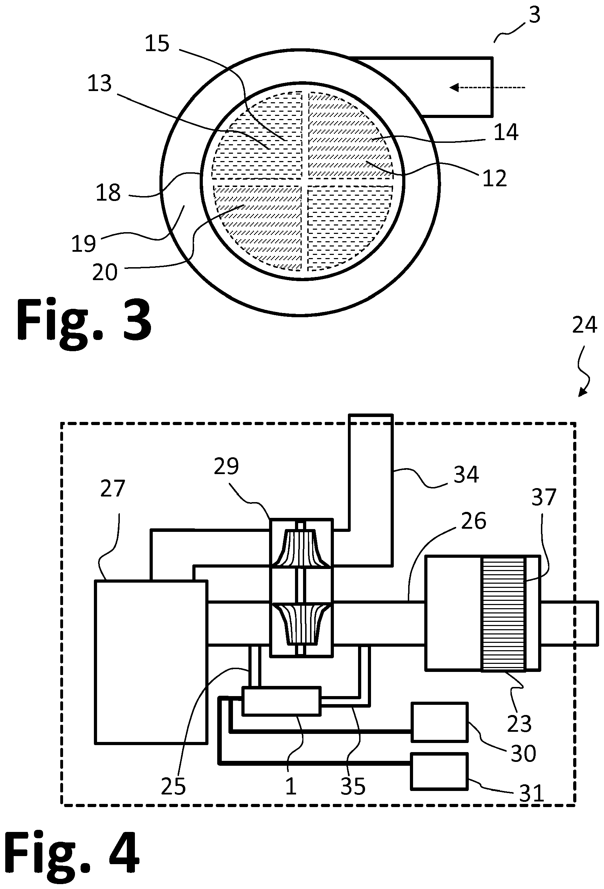

Die Fig. 2 und 3 zeigen jeweils Schnitte durch unterschiedliche Ausführungsvarianten der Vorrichtung 1 aus Fig. 1 in einer senkrecht zu der axialen Richtung angeordneten Schnittrichtung. Zu erkennen ist jeweils der tangential angeordnete Einströmanschluss 3 sowie das Umlenkelement 18, das Gehäuse 38, der zylindrische Spalt 19 und die zentrale Kammer 20. Auch zu erkennen sind der erste Auftreffbereich 14 und der zweite Auftreffbereich 15. Gemäß Fig. 2 ist der zweite Auftreffbereich 15 konzentrisch um den ersten Auftreffbereich 14 herum angeordnet. Gemäß Fig. 3 ist eine alternative Ausführungsvariante gewählt, bei welcher der erste Auftreffbereich 14 und der zweite Auftreffbereich 15 jeweils Viertelstücke einer kreisförmigen Grundfläche bilden. Eine derartige Aufteilung zwischen dem ersten Auftreffbereich 14 für Ammoniak-Vorläuferlösung und dem zweiten Auftreffbereich 15 für Brennstoff kann durch eine geeignete Ausführungsvariante der Zugabevorrichtung und insbesondere der Düse der Zugabevorrichtung erreicht werden. Im ersten Auftreffbereich 14 ist eine erste Beschichtung 12 vorgesehen, die zur Umsetzung der Ammoniak-Vorläuferlösung in Ammoniak dient. Im zweiten Auftreffbereich 15 ist eine zweite Beschichtung 13 vorgesehen, die zur thermischen Umsetzung des Brennstoffs dient.

Fig. 4 zeigt ein Kraftfahrzeug 24, aufweisend eine Verbrennungskraftmaschine 27 und eine Abgasbehandlungsvorrichtung 23 zur Reinigung der Abgase der Verbrennungskraftmaschine 27, die über eine Abgasleitung 26 mit der Verbrennungskraftmaschine 27 verbunden ist. Die Verbrennungskraftmaschine 27 weist darüber hinaus eine Ansaugleitung 34 auf, über welche die Verbrennungskraftmaschine 27 Luft (aus der Umgebung) ansaugt. Das Kraftfahrzeug 24 weist auch einen Turbolader 29 auf, mit welchem die Ansaugluft der Verbrennungskraftmaschine 27 aufgeladen bzw. verdichtet werden kann. Der Turbolader 29 wird von den durch die Abgasleitung 26 strömenden Abgasen angetrieben. In Abgasströmungsrichtung vor dem Turbolader 29 zweigt ein Leitungsabzweig 25 von der Abgasleitung 26 ab, der zu einer beschriebenen Vorrichtung 1 führt. Der Ammoniak, der von der Vorrichtung 1 erzeugt wurde, wird über eine Zugabeleitung 35 in Abgasströmungsrichtung hinter dem Turbolader 29 der Abgasleitung 26 zugegeben, so dass der erzeugte Ammoniak in der Abgasbehandlungsvorrichtung 23 zur Abgasreinigung verwendet werden kann. In der Abgasbehandlungsvorrichtung 23 ist ein SCR-Katalysator 37 angeordnet, mit dem Stickstoffoxidverbindungen im Abgas der Verbrennungskraftmaschine 27 zusammen mit dem Ammoniak aus der Vorrichtung 1 umgesetzt werden können. Die Vorrichtung 1 wird aus einem Brennstofftank 31 mit Brennstoff und aus einem Vorläuferlösungstank 30 mit Ammoniak-Vorläuferlösung versorgt.

Durch die beschriebene Vorrichtung wird die besonders zuverlässige Bereitstellung von Ammoniak für eine Abgasbehandlungsvorrichtung auch bei besonders niedrigen Abgastemperaturen gewährleistet. Gleichzeitig ist dafür ein besonders geringer Bedarf an Energie notwendig und Ammoniak kann in Form einer Ammoniak-Vorläuferlösung bereitgehalten werden und von der Vorrichtung zu Ammoniak umgesetzt werden. Die Vorrichtung ist insbesondere zur Reinigung von Diesel-Abgasen von Verbrennungskraftmaschinen geeignet, die viel im Teillastbereich betrieben werden.

### Bezugszeichenliste

- 1: Vorrichtung
- 2: Reaktionsraum
- 3: Einströmanschluss
- 4: Ausströmanschluss
- 5: Zugabevorrichtung
- 6: Dosierventil
- 7: erste Zuleitung
- 8: zweite Zuleitung
- 9: Auftreffstruktur
- 10: Düse
- 11: Sprühbild
- 12: erste Beschichtung
- 13: zweite Beschichtung
- 14: erster Auftreffbereich
- 15: zweiter Auftreffbereich
- 16: elektrische Heizung
- 17: beheizbarer Wabenkörper
- 18: Umlenkelement
- 19: zylindrischer Spalt
- 20: zentrale Kammer
- 21: Umlenkbereich
- 22: axiale Richtung
- 23: Abgasbehandlungsvorrichtung
- 24: Kraftfahrzeug
- 25: Leitungsabzweig
- 26: Abgasleitung
- 27: Verbrennungskraftmaschine
- 28: Wirbelströmung
- 29: Turbolader
- 30: Vorläuferlösungstank
- 31: Brennstofftank
- 32: Katalysatorträgerkörper
- 33: Sensor
- 34: Ansaugleitung
- 35: Zugabeleitung
- 36: perforierte Blende
- 37: SCR-Katalysator
- 38: Gehäuse

## Patentansprüche

1. Vorrichtung (1) zur Erzeugung von Ammoniak aus einer Ammoniak-Vorläuferlösung, aufweisend einem Reaktionsraum (2) mit einem Einströmanschluss (3), durch welchen ein Abgasstrom in den Reaktionsraum (2) einströmen kann, mit einem Ausströmanschluss (4), durch welchen ein ammoniakhaltiger Gasstrom den Reaktionsraum (2) verlassen kann, und mit einer Zugabevorrichtung (5), mit welcher dem Reaktionsraum (2) wahlweise eine Ammoniak-Vorläuferlösung oder ein Brennstoff zugegeben werden kann, wobei in dem Reaktionsraum (2) eine elektrische Heizung (16) angeordnet ist.

2. Vorrichtung (1) nach Patentanspruch 1, wobei die Zugabevorrichtung (5) ein Dosierventil (6) umfasst, das eine erste Zuleitung (7) für Ammoniak-Vorläuferlösung und eine zweite Zuleitung (8) für einen Brennstoff aufweist.

3. Vorrichtung (1) nach Patentanspruch 1 oder 2, wobei in dem Reaktionsraum (2) eine Auftreffstruktur (9) angeordnet ist, auf welche die Zugabevorrichtung (5) ausgerichtet ist und auf welche die zugeführte Ammoniak-Vorläuferlösung auftrifft.

4. Vorrichtung (1) nach Patentanspruch 3, wobei die Auftreffstruktur (9) mit einer Beschichtung (12, 13) versehen ist, die sowohl eine Hydrolyse von Ammoniak-Vorläuferlösung in Ammoniak als auch eine exotherme Reaktion von Brennstoff mit Sauerstoff katalysiert.

5. Vorrichtung (1) nach einem der vorhergehenden Patentansprüche, wobei die Zugabevorrichtung (5) eine gemeinsame Düse (10) umfasst, mit der Ammoniak-Vorläuferlösung und Brennstoff in den Reaktionsraum (2) gesprüht werden, wobei die Düse (10) mit Ammoniak-Vorläuferlösung und mit Brennstoff unterschiedliche Sprühbilder (11) erzeugt.

6. Vorrichtung (1) nach einem der vorhergehenden Patentansprüche, wobei innerhalb des Reaktionsraums (2) unterschiedliche Auftreffbereiche (14, 15) für Ammoniak-Vorläuferlösung und für Brennstoff vorgesehen sind.

7. Vorrichtung (1) nach Patentanspruch 6, wobei die elektrische Heizung (16) ein elektrisch beheizbarer Wabenkörper (17) ist.

8. Vorrichtung (1) nach einem der vorhergehenden Patentansprüche, wobei der Einströmanschluss (3) tangential an dem Reaktionsraum (2) angeordnet ist.

9. Vorrichtung (1) nach einem der vorhergehenden Patentansprüche, wobei der Reaktionsraum (2) durch ein zylindrisches Umlenkelement (18) in einen zylindrischen Spalt (19) und eine zentrale Kammer (20) unterteilt ist, wobei der zylindrische Spalt (19) und die zentrale Kammer (20) über einen Umlenkbereich (21) miteinander verbunden sind, wobei der Einströmanschluss (3) an dem zylindrischen Spalt (19) angeordnet ist, der Abgasstrom von dem zylindrischen Spalt (19) durch den Umlenkbereich (21) in die zentrale Kammer (20) geleitet wird und die Zugabevorrichtung (5) die Vorläuferlösung und den Brennstoff durch den Umlenkbereich (21) in einer axialen Richtung (22) in die zentrale Kammer (20) zugibt.

10. Abgasbehandlungsvorrichtung (23) zur Reinigung der Abgase einer Verbrennungskraftmaschine (27) aufweisend eine Vorrichtung (1) zur Erzeugung von Ammoniak nach einem der vorhergehenden Patentansprüche, wobei der Einströmanschluss (3) über einen Leitungsabzweig (25) an eine Abgasleitung (26) der Abgasbehandlungsvorrichtung (23) angeschlossen ist und der Ausströmanschluss (4) über eine Zugabeleitung (35) an die Abgasleitung (26) angeschlossen ist, wobei durch den Einströmanschluss (3) zwischen 0,1 Prozent und 5 Prozent des Abgases aus der Verbrennungskraftmaschine (27) in den Reaktionsraum (2) strömt.

## Claims

1. Device (1) for generating ammonia from an ammonia precursor solution, having a reaction space (2) with an inflow connector (3) through which an exhaust-gas flow can flow into the reaction space (2), having an outflow connector (4) through which an ammonia-containing gas flow can exit the reaction space (2), and having a metering device (5) by way of which selectively an ammonia precursor solution or a fuel can be metered into the reaction space (2), wherein an electric heater (16) is arranged in the reaction space (2).

2. Device (1) according to Patent Claim 1, wherein the metering device (5) comprises a dosing valve (6) which has a first feed line (7) for ammonia precursor solution and a second feed line (8) for a fuel.

3. Device (1) according to Patent Claim 1 or 2, wherein, in the reaction space (2), there is arranged an impingement structure (9) toward which the metering device (5) is oriented and which is impinged on by the supplied ammonia precursor solution.

4. Device (1) according to Patent Claim 3, wherein the impingement structure (9) is provided with a coating (12, 13) which catalyzes both a hydrolysis of ammonia precursor solution into ammonia and an exothermic reaction of fuel with oxygen.

5. Device (1) according to one of the preceding patent claims, wherein the metering device (5) comprises a common nozzle (10) by way of which ammonia precursor solution and fuel are sprayed into the reaction space (2), wherein the nozzle (10) generates different spray patterns (11) with ammonia precursor solution and with fuel.

6. Device (1) according to one of the preceding patent claims, wherein different impingement regions (14, 15) for ammonia precursor solution and for fuel are provided within the reaction space (2).

7. Device (1) according to Patent Claim 6, wherein the electric heater (16) is an electrically heatable honeycomb body (17).

8. Device (1) according to one of the preceding claims, wherein the inflow connector (3) is arranged tangentially at the reaction space (2).

9. Device (1) according to one of the preceding patent claims, wherein the reaction space (2) is divided by a cylindrical diverting element (18) into a cylindrical gap (19) and a central chamber (20), wherein the cylindrical gap (19) and the central chamber (20) are connected to one another by way of a diverting region (21), wherein the inflow connector (3) is arranged at the cylindrical gap (19), the exhaust-gas flow from the cylindrical gap (19) is conducted into the central chamber (20) through the diverting region (21), and the metering device (5) meters the precursor solution and the fuel in an axial direction (22) into the central chamber (20) through the diverting region (21).

10. Exhaust-gas treatment device (23) for the purification of the exhaust gases of an internal combustion engine (27), having a device (1) for generating ammonia according to one of the preceding patent claims, wherein the inflow connector (3) is connected by way of a line branch (25) to an exhaust line (26) of the exhaust-gas treatment device (23), and the outflow connector (4) is connected by way of a metering line (35) to the exhaust line (26), wherein, through the inflow connector (3), between 0.1 percent and 5 percent of the exhaust gas from the internal combustion engine (27) flows into the reaction space (2).

## Revendications

1. Dispositif (1) pour la production d'ammoniac à partir d'une solution de précurseur d'ammoniac, présentant une chambre de réaction (2) avec un raccord d'entrée (3), par lequel un courant de gaz d'échappement peut pénétrer dans la chambre de réaction (2), avec un raccord de sortie (4), par lequel un courant gazeux contenant de l'ammoniac peut quitter la chambre de réaction (2), et avec un dispositif d'amenée (5), avec lequel une solution de précurseur d'ammoniac ou un combustible peut au choix être amené(e) à la chambre de réaction (2), dans lequel un chauffage électrique (16) est disposé dans la chambre de réaction (2).

2. Dispositif (1) selon la revendication 1, dans lequel le dispositif d'amenée (5) comprend une soupape de dosage (6), qui présente une première conduite d'arrivée (7) pour la solution de précurseur d'ammoniac et une seconde conduite d'arrivée (8) pour un combustible.

3. Dispositif (1) selon la revendication 1 ou 2, dans lequel une structure d'impact (9) est disposée dans la chambre de réaction (2), vers laquelle le dispositif d'amenée (5) est dirigé et contre laquelle la solution de précurseur d'ammoniac amenée vient frapper.

4. Dispositif (1) selon la revendication 3, dans lequel la structure d'impact (9) est munie d'un revêtement (12, 13), qui catalyse aussi bien une hydrolyse de la solution de précurseur d'ammoniac en ammoniac qu'une réaction exothermique du combustible avec l'oxygène.

5. Dispositif (1) selon l'une quelconque des revendications précédentes, dans lequel le dispositif d'amenée (5) comprend une buse commune (10), avec laquelle on pulvérise la solution de précurseur d'ammoniac et le combustible dans la chambre de réaction (2), dans lequel la buse (10) produit des figures de pulvérisation différentes avec la solution de précurseur d'ammoniac et avec le combustible.

6. Dispositif (1) selon l'une quelconque des revendications précédentes, dans lequel il est prévu à l'intérieur de la chambre de réaction (2) des zones d'impact différentes (14, 15) pour la solution de précurseur d'ammoniac et pour le combustible.

7. Dispositif (1) selon la revendication 6, dans lequel le chauffage électrique (16) est un corps en nid d'abeilles (17) à chauffage électrique.

8. Dispositif (1) selon l'une quelconque des revendications précédentes, dans lequel le raccord d'entrée (3) est disposé tangentiellement à la chambre de réaction (2).

9. Dispositif (1) selon l'une quelconque des revendications précédentes, dans lequel la chambre de réaction (2) est divisée par un élément de déviation cylindrique (18) en une fente cylindrique (19) et une chambre centrale (20), dans lequel la fente cylindrique (19) et la chambre centrale (20) sont reliées l'une l'autre par une zone de déviation (21), dans lequel le raccord d'entrée (3) est disposé à la fente cylindrique (19), le courant de gaz d'échappement est conduit de la fente cylindrique (19) à travers la zone de déviation (21) dans la chambre centrale (20) et le dispositif d'amenée (5) amène la solution de précurseur d'ammoniac et le combustible à travers la zone de déviation (21) dans une direction axiale (22) dans la chambre centrale (20).

10. Dispositif de traitement de gaz d'échappement (23) pour l'épuration des gaz d'échappement d'un moteur à combustion interne (27), présentant un dispositif (1) pour la production d'ammoniac selon l'une quelconque des revendications précédentes, dans lequel le raccord d'entrée (3) est raccordé par un branchement (25) à une conduite de gaz d'échappement (26) du dispositif de traitement de gaz d'échappement (23) et le raccord de sortie (4) est raccordé à la conduite de gaz d'échappement (26) par une conduite d'amenée (35), dans lequel entre 0,1 % et 5 % des gaz d'échappement provenant du moteur à combustion interne (27) s'écoulent dans la chambre de réaction (2) par le raccord d'entrée (3).
